(19) Europäisches Patentamt
European Patent Office
Office européen des brevets

(11) **EP 3 335 351 B1**

(12) **EUROPEAN PATENT SPECIFICATION**

(45) Date of publication and mention
of the grant of the patent:
**17.05.2023   Bulletin 2023/20**

(21) Application number: **15757001.1**

(22) Date of filing: **11.08.2015**

(51) International Patent Classification (IPC):
**H04L 5/00** (2006.01)

(52) Cooperative Patent Classification (CPC):
**H04L 5/0035; H04L 5/0044; H04L 5/0057**

(86) International application number:
**PCT/IB2015/056125**

(87) International publication number:
**WO 2017/025777 (16.02.2017 Gazette 2017/07)**

(54) **CLUSTER-SPECIFIC REFERENCE SIGNAL CONFIGURATION FOR CELL COORDINATION**

CLUSTERSPEZIFISCHE REFERENZSIGNALKONFIGURATION ZUR ZELLKOORDINIERUNG

CONFIGURATION DE SIGNAL DE RÉFÉRENCE SPÉCIFIQUE À UN GROUPE POUR UNE COORDINATION DE CELLULES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.06.2018   Bulletin 2018/25**

(73) Proprietor: **Telefonaktiebolaget LM Ericsson (PUBL)**
**164 83 Stockholm (SE)**

(72) Inventors:
• **BONTU, Chandra Sekhar**
**Nepean, Ontario K2J 5G8 (CA)**
• **FANTAYE, Girum Alebachew**
**Ottawa, Ontario K2J 0L1 (CA)**
• **GEORGE, Mercy**
**Kanata, Ontario K2T 0E8 (CA)**
• **LONG, Jianguo**
**Kanata, Ontario K2M 1M9 (CA)**
• **XU, Hua**
**Ottawa, Ontario K2M 1N6 (CA)**

(74) Representative: **Zacco Sweden AB**
**P.O. Box 5581**
**Löjtnantsgatan 21**
**114 85 Stockholm (SE)**

(56) References cited:
**WO-A1-2011/100520     US-A1- 2014 286 189**

• **ERICSSON: "Discussion on number of CSI processes for Inter eNB CoMP", 3GPP DRAFT; R3-150723_ECOMP_CSI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Tenerife, Spain; 20150420 - 20150424 11 April 2015 (2015-04-11), XP050937335, Retrieved from the Internet: URL:http://www.3gpp.org/ftp/Meetings_3GPP_SYNC/RAN3/Docs/ [retrieved on 2015-04-11]**
• **"3rd Generation Partnership Project; Technical Specification Group Radio Access Network; Coordinated multi-point operation for LTE physical layer aspects (Release 11)", 3GPP STANDARD; 3GPP TR 36.819, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V11.2.0, 18 September 2013 (2013-09-18), pages 1-70, XP050712693, [retrieved on 2013-09-18]**

**Description**

TECHNICAL FIELD

The present disclosure relates to coordination of radio resources, and in particular to cell coordination using a cluster-specific channel state information (CSI) reference signal (RS) configuration.

BACKGROUND

As demand for wireless devices continues to surge, Long Term Evolution (LTE) and LTE-Advanced continue to evolve with a focus on providing higher capacity by increasing peak data rates, spectral efficiency, improving performance at cell edges and increasing the number of active subscribers that are simultaneously supported, etc. One way LTE-Advanced strives to achieve high capacity is by supporting enhanced use of multi-antenna techniques such as Multiple Input Multiple Output (MIMO) or Beam Forming (BF). MIMO is used to increase the overall bitrate through simultaneous transmission, using two or more different antennas, of two or more different information signals on the same radio resources to be received by one (single user) or more (multi-user) receivers using two or more antennas. In the case of BF, the same information is precoded and transmitted by more than one antenna towards the intended receiver. A precoding vector of the precoding is adapted such that most of the transmitted power is directed towards the intended receiver. These multi-antenna transmission techniques combined with cell coordination further enhance the overall network capacity and coverage. In cell coordination, the downlink (DL) and uplink (UL) transmissions across a cluster of cells are scheduled such that the inter-cell interference is controlled and the transmission from or to a wireless device is scheduled from an appropriate cell within the cluster to maximize the signal to interference ratio.

In order to be able to adjust the type of multi-antenna transmission scheme, a number of different Transmission Modes (TM) have been defined. For example, in 3GPP LTE-Advanced in release 10, TM 9 was introduced to combine the advantages of high spectral efficiency, e.g., support up to 8-layer single user (SU) MIMO and multi-user (MU) MIMO, and cell-edge data rates (Beam Forming) on the downlink (DL). TM 9 also supports dynamic switching between SU MIMO and MU MIMO. Further, channel state information (CSI) reference signals (RS) are introduced to assist the connected wireless devices to measure the CSI and feedback CSI information to the network node. Using the CSI-RS, data can be transmitted on more than four independent layers (up to eight independent layers) unlike in the case of cell-specific reference symbols (CRS), where the number of independent layers are limited to four. The RS overhead due to the inclusion of CSI-RS is less than the overhead due to cell-specific reference symbols (CRS). Typically the overhead due to CSI-RS per physical resource block (PRB) is one resource element (RE) per antenna port per subframe. CSI-RS configuration is dependent on the number of transmit antenna ports. For example, there are two, four and eight REs per PRB for one or two, four and eight transmit antenna ports respectively, as defined in 3GPP Technical Specification 36.211 v10.5.0.

In TM 9, each cell can configure one non-zero power (NZP) CSI-RS and one zero power (ZP) CSI-RS per carrier. In particular, CSI reference signal configuration is mapped to (k', l') for normal cyclic prefix as defined in 3GPP TS 36.211. Table 1 illustrates this mapping. Here $k'$ and $l'$ identify the RE within a PRB pair in which $k'$ is the frequency index and $l'$ is the orthogonal frequency-division multiplexing (OFDM) symbol index within a PRB pair. Also, $n_s$ indicates the slot number within the PRB pair.

| | CSI reference signal configuration | Number of CSI reference signals configured | | | | | |
|---|---|---|---|---|---|---|---|
| | | 1 or 2 | | 4 | | 8 | |
| | | $(k',l')$ | $n_s \bmod 2$ | $(k',l')$ | $n_s \bmod 2$ | $(k',l')$ | $n_s \bmod 2$ |
| Frame structure type 1 and 2 | 0 | (9,5) | 0 | (9,5) | 0 | (9,5) | 0 |
| | 1 | (11,2) | 1 | (11,2) | 1 | (11,2) | 1 |
| | 2 | (9,2) | 1 | (9,2) | 1 | (9,2) | 1 |
| | 3 | (7,2) | 1 | (7,2) | 1 | (7,2) | 1 |
| | 4 | (9,5) | 1 | (9,5) | 1 | (9,5) | 1 |
| | 5 | (8,5) | 0 | (8,5) | 0 | | |
| | 6 | (10,2) | 1 | (10,2) | 1 | | |
| | 7 | (8,2) | 1 | (8,2) | 1 | | |
| | 8 | (6,2) | 1 | (6,2) | 1 | | |
| | 9 | (8,5) | 1 | (8,5) | 1 | | |
| | 10 | (3,5) | 0 | | | | |
| | 11 | (2,5) | 0 | | | | |
| | 12 | (5,2) | 1 | | | | |
| | 13 | (4,2) | 1 | | | | |
| | 14 | (3,2) | 1 | | | | |
| | 15 | (2,2) | 1 | | | | |
| | 16 | (1,2) | 1 | | | | |
| | 17 | (0,2) | 1 | | | | |
| | 18 | (3,5) | 1 | | | | |
| | 19 | (2,5) | 1 | | | | |
| Frame structure type 2 only | 20 | (11,1) | 1 | (11,1) | 1 | (11,1) | 1 |
| | 21 | (9,1) | 1 | (9,1) | 1 | (9,1) | 1 |
| | 22 | (7,1) | 1 | (7,1) | 1 | (7,1) | 1 |
| | 23 | (10,1) | 1 | (10,1) | 1 | | |
| | 24 | (8,1) | 1 | (8,1) | 1 | | |
| | 25 | (6,1) | 1 | (6,1) | 1 | | |
| | 26 | (5,1) | 1 | | | | |
| | 27 | (4,1) | 1 | | | | |
| | 28 | (3,1) | 1 | | | | |
| | 29 | (2,1) | 1 | | | | |
| | 30 | (1,1) | 1 | | | | |
| | 31 | (0,1) | 1 | | | | |

TABLE 1

In subframes configured for CSI-RS transmission, the reference signal sequence $r_{1,ns}(m)$, as defined in 6.10.5.1 of 3GPP TS 36.211, is mapped to complex-valued modulation symbols $a_{k,l}^{(p)}$ used as reference symbols on antenna port $p$ according to

$$a_{k,l}^{(p)} = w_{l''} \cdot r_{l,n_s}(m')$$

where $a_{k,l}^{(p)}$ represents the complex valued modulation symbol corresponding to the $k^{th}$ frequency index, $l^{th}$ OFDM symbol in a subframe transmitted on antenna port p. Several variables are defined below.

$$k = k'+12m + \begin{cases} -0 & \text{for } p \in \{15,16\}, \text{normal cyclic prefix} \\ -6 & \text{for } p \in \{17,18\}, \text{normal cyclic prefix} \\ -1 & \text{for } p \in \{19,20\}, \text{normal cyclic prefix} \\ -7 & \text{for } p \in \{21,22\}, \text{normal cyclic prefix} \\ -0 & \text{for } p \in \{15,16\}, \text{extended cyclic prefix} \\ -3 & \text{for } p \in \{17,18\}, \text{extended cyclic prefix} \\ -6 & \text{for } p \in \{19,20\}, \text{extended cyclic prefix} \\ -9 & \text{for } p \in \{21,22\}, \text{extended cyclic prefix} \end{cases}$$

$$l = l' + \begin{cases} l'' & \text{CSI reference signal configurations } 0\text{-}19, \text{normal cyclic prefix} \\ 2l'' & \text{CSI reference signal configurations } 20\text{-}31, \text{normal cyclic prefix} \\ l'' & \text{CSI reference signal configurations } 0\text{-}27, \text{extended cyclic prefix} \end{cases}$$

$$w_{l''} = \begin{cases} 1 & p \in \{15,17,19,21\} \\ (-1)^{l''} & p \in \{16,18,20,22\} \end{cases}$$

$$l'' = 0,1$$

$$m = 0,1,\ldots,N_{RB}^{DL} - 1$$

$$m' = m + \left\lfloor \frac{N_{RB}^{max,DL} - N_{RB}^{DL}}{2} \right\rfloor$$

In TM 9, each cell can configure one NZP CSI-RS and one ZP CSI-RS per carrier. The wireless device reports one CSI report per carrier. Therefore, in existing systems, there is very limited feedback from a TM 9 wireless device to assist in DL cell coordination.

US 2014/286189 A1 seems to describe a method and apparatus for measuring interference in a wireless communication system. The method describes receiving a cell-specific interference measurement region configuration message from the base station, and measuring interference in a resource region indicated by the cell-specific interference measurement region configuration message.

Document Ericsson:"Discussion on number of CSI processes for Inter eNB CoMP", 3GPP DRAFT; R3-150723, describes a method for CSI-RS resource allocation and describes limitations on CSI-IM processes per cell in a CoMP cluster. The allocation of CSI IM resources are by splitting CSI IM resources on different subframes. D1 describes issues based on a maximum of 3 CSI IM processes per cell in a 3 cells coordination clusters, which increases spectral capacity losses due to CSI coordination. The method describes CSI-RS configurations with respect to the individual cells of the cluster and describes taking measurement in each cell to monitor interference levels for each neighbour cell.

WO 2011/100520 A1 seems to describe a method of decoding a CSI-RS in which an indication of a RE configuration allocated for transmission of CSI-RSs by a first cell is received from a second cell. The method includes at least one of using the indication of the RE configuration to decode a first CSI-RS received from the first cell and using the indication of the RE configuration to mute one or more REs within a data channel transmission received from a third cell. The first cell, second cell and the third cell may be associated within a CSI-RS group. In some cases, at least two of the first cell, the second cell and the third cell are mutually interfering cells.

Document "3rd Generation Partnership Project; Technical Specification Group Radio Access Network; Coordinated multi-point operation for LTE physical layer aspects (Release 11)", 3GPP STANDARD; 3GPP TR 36.819, vol. RAN WG1, no. V11.2.0, describes three main categories of CoMP feedback mechanisms that are Explicit channel state/statistical information feedback, Implicit channel state/statistical information feedback, and the UE transmission of SRS can be used for CSI estimation at eNB exploiting channel reciprocity. For the CoMP schemes that require feedback, individual per-point feedback with or without complementary inter-point feedback is considered as baseline and the UE reports CSI feedback based on the assumption of single-user transmission for the work specifying CoMP.

SUMMARY

A node, a method and a computer readable storage medium are defined by appended independent claims 1, 9, 15 respectively. The invention is defined by the appended claims.

BRIEF DESCRIPTION OF THE DRAWINGS

A more complete understanding of the present disclosure, and the attendant advantages and features thereof, will be more readily understood by reference to the following detailed description when considered in conjunction with the accompanying drawings wherein:

FIG. 1 is a block diagram of an exemplary system for cluster-specific CSI-RS configuration for cell coordination in accordance with the principles of the disclosure;
FIG. 2 is a flow chart of an exemplary configuration process in accordance with the principles of the disclosure;
FIG. 3 is a block diagram of one embodiment of a cluster-specific CSI-RS configuration in accordance with the principles of the disclosure;
FIG. 4 is a block diagram of one embodiment of the cluster-specific CSI-RS configuration, described in FIG. 3, at each cell of the cluster in accordance with the principles of the disclosure;
FIG. 5 is a flow chart of an exemplary downlink coordination process in accordance with the principles of the disclosure;
FIG. 6 is a flow chart of an exemplary scheduling process in accordance with the principles of the disclosure;
FIG. 7 is a flow chart of an exemplary cell coordination process in accordance with the principles of the disclosure;
FIG. 8 is flow chart of another exemplary downlink coordination process in accordance with the principles of the disclosure;
FIG. 9 is a block diagram of another exemplary radio resource management node in accordance with the principles of the disclosure; and
FIG. 10 is a flow chart of an exemplary radio resource control signaling process during transition between cells of different sub-clusters of a cluster in accordance with the principles of the disclosure.

DETAILED DESCRIPTION

The method(s), node(s) and system(s) described herein advantageously provide cell coordination for wireless communications. In particular, a cluster-specific CSI-RS configuration to assist cell coordination is provided. For example, the same cluster-based CSI-RS configuration is used in all cells within the cluster in which unmuted radio resources corresponding to the CSI-RS configuration are partitioned. The cluster-specific CSI-RS configuration, e.g., non-zero power (NZP) CSI-RS configuration, corresponds to the total number of transmit antennas of all the cells within the cluster. The cluster-specific CSI-RS configuration advantageously allows all the wireless devices within the cluster to report CSI that represents the achievable signal-to-interference plus noise ratio (SINR) with respect to the cluster of cells. Further, based on the uplink signal quality derived from the uplink signal received from the wireless device and cluster-specific CSI report received from the wireless device, subsequent downlink transmissions to the wireless device can be scheduled on a selected set of radio resources using parameter(s) specified in the CSI report. Therefore, using the total number of antennas of all the cells within the cluster, multi-layer transmission can be scheduled for the wireless device. For multiple wireless devices with downlink transmission scheduled on a set of cells within the cluster, the downlink transmission can simultaneously be scheduled for the multiple wireless devices on the same radio resources to achieve multi-user MIMO transmission. Further, in one or more embodiments, an additional CSI-RS configuration, e.g., zero-power (ZP) CSI-RS configuration, is provided in which the additional CSI-RS configuration allows wireless devices to measure received power of interference received from cells outside the cluster, which may provide further advantageous such as interference rejection combining as discussed below.

Before describing in detail exemplary embodiments that are in accordance with the disclosure, it is noted that the embodiments reside primarily in combinations of apparatus/node components and processing steps related to providing cell coordination in a cluster. Accordingly, components have been represented where appropriate by conventional symbols in drawings, showing only those specific details that are pertinent to understanding the embodiments of the disclosure so as not to obscure the disclosure with details that will be readily apparent to those of ordinary skill in the art having the benefit of the description herein.

As used herein, relational terms, such as "first," "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

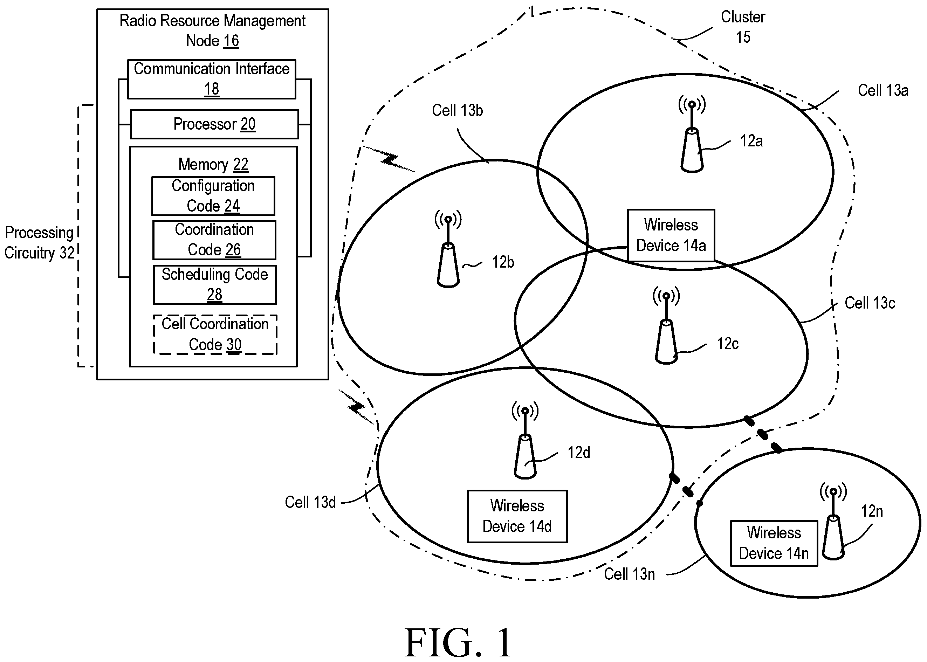

Referring now to drawing figures in which like reference designators refer to like elements there is shown in FIG. 1 an exemplary system for cluster-specific CSI-RS configuration for cell coordination in accordance with the principles of the present disclosure and designated generally as "10." System 10 includes one or more nodes 12a-12n (hereinafter collectively referred to as node 12), one or more wireless devices 14a-14n (hereinafter collectively referred to as wireless device 14) and one or more radio resource management (RRM) nodes 16, among other nodes, devices and entities. In one or more embodiments, node 12 is an eNodeB (eNB), base station, radio base station, base transceiver station, relay node, remote radio unit (RRU) remote radio head (RRH), access point, among other types of nodes known in the art. While each node 12 is illustrated as providing a respective cell coverage area (cell 13), each node 12 may provide one or more cells 13a-13n (hereinafter collectively referred to as cell 13) or sectors. Irrespective of how each cell 13 is provided, each cell 13 is associated with a respective number of antennas, e.g., transmit antennas. In one or more embodiments, one or more cells 13 form cluster 15 in which each cell 13 in cluster 15 has the same cellular identification (cell ID) as other cells 13 in cluster 15. For example, as illustrated in FIG. 1, cells 13a-13d form cluster 15. However, in one or more embodiments, cluster 15 includes more or less cells 13 than illustrated in FIG. 1. System 10 may include one or more clusters 15.

One or more wireless devices 14 are in communication with one or more nodes 12. Wireless device 14 may be a radio communication device, target device, device-to-device wireless device, user equipment (UE), machine type wireless device or wireless device capable of machine to machine communication, a sensor equipped with wireless device, tablet, mobile terminal, mobile telephone, laptop, computer, appliance, automobile, smart phone, laptop embedded equipped (LEE), laptop mounted equipment (LME), USB dongle and customer premises equipment (CPE), among other devices that can communicate radio or wireless signals as are known in the art.

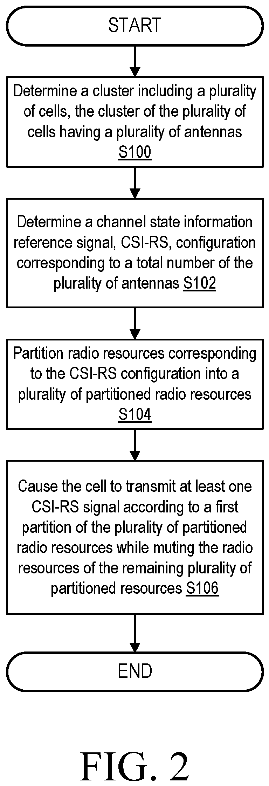

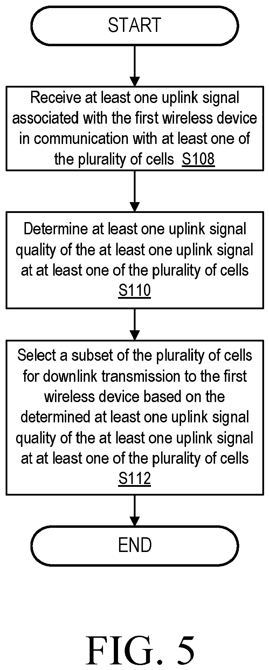

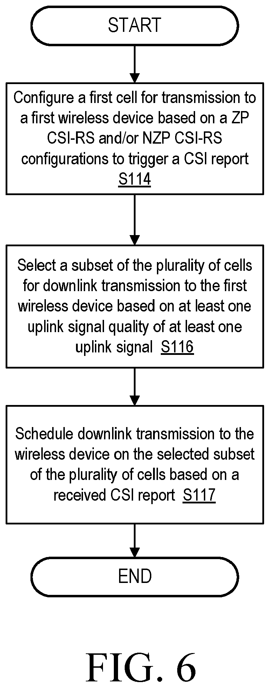

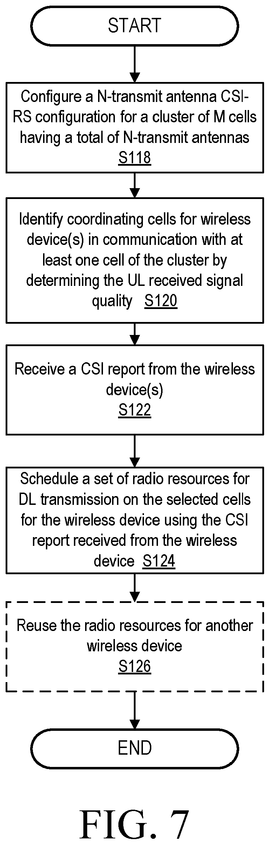

RRM node 16 includes one or more communication interfaces 18 for communicating with one or more nodes 12 and one or more wireless devices 14. RRM node 16 includes one or more processors 20 for performing RRM node 16 functions described herein. RRM node 16 includes memory 22 that is configured to store code such as configuration code 24, coordination code 26, scheduling code 28 and/or cell coordination code 30. For example, configuration code 24 includes instructions, which when executed by processor 20, causes processor 20 to perform the configuration process, discussed in detail with respect to FIG. 2. In another example, coordination code 26 includes instructions, which when executed by processor 20, cause processor 20 to perform the coordination process, discussed in detail with respect to FIG. 5. In yet another example, scheduling code 28 includes instructions, which when executed by processor 20, causes processor 20 to perform the scheduling process, discussed in detail with respect to FIG. 6. In yet another example, cell coordination code 30 includes instructions, which when executed by processor 20, cause processor 20 to perform the cell coordination process, discussed in detail with respect to FIG. 7. In one or more embodiments, cell coordination code 30 is omitted from RRM 16 based on design need.

In one or more embodiments, processor 20 and memory 22 form processing circuitry 32 containing instructions which, when executed configure processor 20 to perform the one or more functions described with respect to FIGS. 2, 5, 6, 7 and 8. While RRM node 16 is shown as a separate element from node 12, in one or more embodiments: RRM node 16 and node 12 may be the same element, node 12 may include functions of RRM node 16, or RRM node 16 may include functions of node 12.

Memory 22 may include non-volatile and/or volatile memory. For example, non-volatile memory may include a hard drive, flash memory, programmable integrated circuits, memory stick, solid state memory and the like. Also, volatile memory may include random access memory and others known in the art. In one or more embodiments, memory 22 is any suitable tangible computer readable medium that may be utilized including hard disks, CD-ROMs, electronic storage devices, optical storage devices, or magnetic storage devices.

FIG. 2 is a flow diagram of an exemplary configuration process. In one or more embodiments the configuration process is embodied as configuration code 24. Processing circuitry 32 determines cluster 15 including plurality of cells 13 (Block S100). Cluster 15 of the plurality of cells 13 has or is associated with the plurality of antennas, i.e., has or is associated with a total number of transmits antennas of cluster 15. In one example, cluster 15 includes four cells 13 in which each cell 13 is associated with two respective antennas; therefore, cluster 15 has or is associated with eight antennas, e.g., eight transmit antennas. In one or more embodiments, the number of cells 13 in cluster 15 and antennas per cell 13 may vary depending on design need, but the processes described herein are equally applicable to these embodiments. The determination of cluster 15, i.e., initial grouping of cells 13, may be based on one or more methods know in the art.

Processing circuitry 32 determines a channel state information reference signal (CSI-RS) configuration, e.g., non-zero power (NZP) CSI-RS configuration, corresponding to a total number of the plurality of antennas associated with cluster 15 (Block S102). The CSI-RS configuration corresponding to the total number of the plurality of transmit antennas is configured for all the cells 13 in cluster 15, even though the one or more cells 13 in cluster 15 includes or is associated with less transmit antennas than the total number of transmit antennas. For example, if there are four cells 13 in cluster 15 and each cell 13 has two transmit antennas, then the CSI-RS configuration corresponds to an eight transmit antenna configuration. In other words, the antenna ports corresponding to CSI-RS configuration correspond to actual transmit antennas. In general, as outlined in 3GPP specification TS36.211, the antenna ports corresponding to CSI-RS configuration are referred to as antenna port 15 up to antenna port 22.

The exact set of resource elements, i.e., radio resources, out of a maximum of forty different resource elements within a physical resource block (PRB) pair that are assigned CSI reference signals varies depending on CSI-RS configuration. In other words, a CSI-RS configuration corresponds to a predefined total amount of resource element(s) or radio resources in a physical resource block (PRB) in which the specific resource elements used are based on the specific CSI-RS configuration. For example, if the CSI-RS configuration consists of one or two "CSI reference signals configured" from Table 1, the CSI-RS would consist of two reference signals transmitted on two resource elements in each PRB pair across the carrier bandwidth. With a maximum of forty REs allocated in a PRB pair, in the case of one or two CSI-RS signals configured, there is a possibility for 20 different CSI-RS configurations in a resource-block pair.

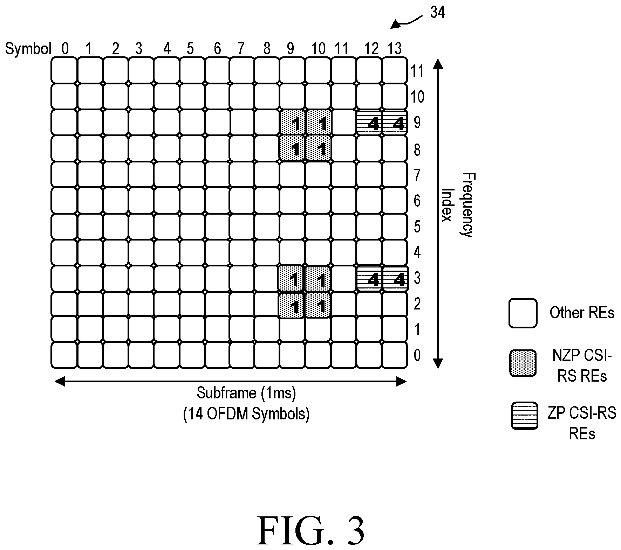

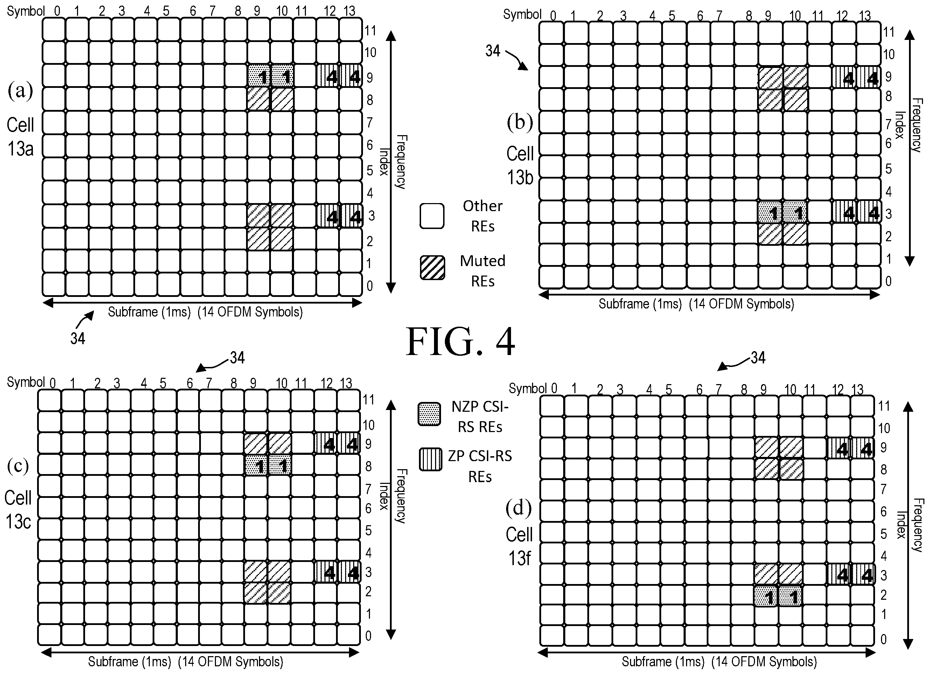

In another example, if the CSI-RS configuration consists of four or eight "CSI-reference signals configured" from Table 1 that correspond to four or eight transmit antennas, the CSI-RS resources may be pair-wise frequency multiplexed as specified in Table 6.105.2-1 of 3GPP TS36.211. In the case of four/eight CSI-RS signals that are configured there are ten/five different CSI-RS configurations respectively. An example of a CSI-RS configuration and corresponding radio resources for cluster 15 with four cells 13 in which each cell 13 is associated or includes two antennas is discussed in detail with respect to FIGS. 3 and 4.

In one or more embodiments, in addition to NZP CSI-RS, ZP reference signal is configured at all cells 13 within cluster 15. For example, all the cells 13 in cluster 15 may be configured with the same ZP CSI-RS configuration, i.e., same corresponding ZP CSI-RS REs, as discussed in detail with respect to FIGS. 3 and 4. When wireless device 14 measures the received power in ZP CSI-RS REs, the measured received power corresponds to the power of interference received from cells 13 outside cluster 15. Wireless device 14 equipped with an advanced receiver, may use the CSI-RS measurements of the ZP CSI-RS REs to implement interference rejection combining (IRC). Wireless devices 14 that are not equipped with an advanced receiver may measure the CSI based on signal quality metric measured on the received NZP CSI-RS signals. Wireless devices 14 that are equipped with an advanced receiver may measure the CSI based on signal quality metric measured on the received NZP CSI-RS signals and the measured inter-cluster interference metric measured over the ZP CSI-RS resources.

Processing circuitry 32 partitions radio resources corresponding to the CSI-RS configuration into a plurality of partitioned radio resources (Block S104). For example, radio resources corresponding to an eight transmit antenna non-zero power (NZP) CSI-RS configuration are partitioned such that each cell 13 in cluster 15 is assigned respective partitioned resources of the NZP CSI-RS configuration, as discussed in detail with respect to FIGS. 3 and 4. In one or more embodiments, each partition of NZP CSI-RS radio resources for each cell 13 in cluster 15 is configured such that respective transmission ports do not transmit on resources that are used by other transmits ports, and vice versa , with respect to other NZP CSI-RS partitioned radio resources of other cell(s) 13 in cluster 15. In one or more embodiments, the determined CSI-RS configuration, e.g., NZP CSI-RS configuration, that is applied to the first cell 13 includes a number of unmuted radio resources, e.g., NZP CSI-RS REs, equal to a number of transmit antennas of the first cell 13.

In one or more embodiments, the number of partitions of radio resources, i.e., REs, corresponding to the determined CSI-RS configuration is one of greater than and equal to a number of cells 13 in cluster 15. For example, in one or more embodiments, cluster 15 includes three cells, e.g., Cells 13a, 13b and 13c, in which two cells, e.g., Cells 13a and 13b, each have two transmit antennas and one cell, e.g., Cell 13c, has four transmit antennas. As described above, radio resources corresponding to the CSI-RS configuration with eight CSI-RS signals are partitioned into four partitions. Two partitions are assigned to cell 13c with four transmit antennas, one partition is assigned to cell 13a and one partition is assigned to cell 13b. For each cell, the remaining partitions are muted such that only the partition(s) assigned to a cell remains unmuted for transmission of the CSI-RS signal(s). In one or more embodiments, the number of partitions of radio resources corresponding to the determined CSI-RS configuration is not less than the number of cells in the cluster.

In one or more embodiments, if an additional ZP CSI-RS configuration is configured, the ZP CSI-RS configuration is not partitioned among the cells 13 in cluster 15, i.e., each cell 13 in cluster 15 is assigned the same corresponding ZP CSI-RS resources as discussed in detail with respect to FIGS. 3 and 4. In other words, radio resources corresponding to the NZP CSI-RS configuration for cluster 15 are partitioned among cells 13 of cluster 15 while the ZP CSI-RS configuration is not partitioned among cells 13 of cluster 15.

Processing circuitry 32 causes cell 13, e.g., first cell 13, of cluster 15 to transmit at least one CSI-RS signal according to its respective partitioned radio resources while muting the radio resources of the remaining plurality of partitioned resources (Block S106). For example, in the four cell cluster 15 example where each cell 13 has two transmit antennas, two transmit antennas of a first cell 13 transmit on two REs, e.g., two NZP CSI-RS REs, assigned for CSI ports 15 and 16 while muting REs, e.g., other NZP CSI-RS REs, for CSI ports 17-22. Similarly, two transmit antennas of another cell 13, e.g., second cell 13, transmit on two REs assigned for CSI ports 17 and 18 while the other REs that corresponds to other CSI ports, i.e., 15, 16 and 19-22 CSI ports, are muted. In other words, a second cell 13 of cluster 15 is caused to transmit at least one CSI-RS signal according to a second partition of the plurality of partitioned radio resources while muting the radio resources of the remaining plurality of partitions resources in which the second partition is different from the first partition that is assigned to a first cell 13 of cluster 15.

Wireless device 14 receives and uses the transmitted NZP CSI-RS signal to determine CSI, for example, for transmission settings related to multi-antenna configuration, scheduling, etc., which is subsequently reported back, via CSI report(s), to RRM node 16 via node 12 or directly back to RRM node 16 such as if node 12 functionality is implemented in RRM node 16. The CSI report may include channel quality indication (CQI), precoder matrix indication (PMI) and rank indication (RI) that reflect the spatial, temporal and frequency correlation characteristics of the radio channel between each cell 13 or transmit point and wireless device 14. In a codebook based precoding, wireless device 14 evaluates the detected signal quality from all the predefined precoding vectors and picks the precoding vector which maximizes the detected signal quality. Corresponding rank and CQI along with the selected PMI are reported back to the serving cell 13 via the CSI reports. In one or more embodiments, wireless device 14 measures the inter-cluster interference from DL transmissions on the cells 13 outside cluster 15. Wireless device 14 uses these interference measurements to improve the CSI measurements or determination of CSI. In one or more embodiments, each cell 13 of cluster 15 also transmits a ZP CSI-RS signals assigned to respective cells 13 of cluster 15.

Referring to FIG. 3, there is illustrated one embodiment of a cluster-specific CSI-RS configuration in resource grid 34 in accordance with the disclosure in which cluster 15 includes four cells 13 and each cell 13 is associated with or includes two respective transmit antennas. In particular, the NZP CSI-RS REs correspond to an eight CSI-RS port configuration, i.e., CSI-RS with configuration ID 2 as illustrated in reference Table 6.10.4.2-1, of 3GPP TS 36.211. As shown in Table 1, corresponding "CSI reference signal configuration" of 2 in the second column, the frequency index $k'$, the OFDM symbol index $l'$ and the slot index $n_s$ are indicated as 9, 2 and 1, respectively, for eight CSI-RS antenna ports, i.e., "number of CSI reference signals configured" of 8. Further, k' of 9 results in frequency indices of 9 (i.e., 9-0), 3 (i.e., 9-6), 8 (i.e., 9-1) and 2 (i.e., 9-7) for CSI-RS antenna ports {15, 16}, {17, 18}, {19, 20} and {21, 22} respectively. For example, the CSI-RS signals transmitted on antenna ports 15 and 16 use the same resource elements that are separated by an orthogonal code indicated by sequence $w_{l'}$ in 6.10.5.1 of 3GPP specification TS 36.211.

Similarly the OFDM indices for $l'$ of 2 and $n_s$ of 1 corresponds to the OFDM symbols 9 and 10. As shown in FIG. 4A, the OFDM symbols from left to right are counted from 0 to 13 and the frequency indices are counted from bottom to top from 0 to 11 constitute one physical resource block pair in subframe with normal cyclic prefix. As shown the resource elements used for CSI-RS signals for a CSI-RS configuration of eight transmit antennas can be represented by {(9,9), (10,9)}, {(9,3), (10,3)}, {(9,8), (10,8)} and {(9,2), (10,2)} on the rectangular grid for CSI-RS antenna ports of {15, 16}, {17,18}, {19, 20} and {21, 22} respectively. The eight CSI-RS port configuration of NZP CSI-RS REs is assigned to all four cells 13 of cluster 15 but the REs are partitioned among cells 13 of cluster 15 as illustrated in FIG. 4 and as described with respect to FIG. 2. In other words, the determined CSI-RS configuration is applied to all of the cells 13 in cluster 15, but respective REs in the configuration are partitioned and assigned the cells 13 in cluster 15 and the remaining partition of REs at each cell are muted. For example, in FIG. 4, cells 13 are assigned a respective partition corresponding to CSI-RS configuration ID "2".

The NZP CSI-RS resource partitioning illustrated in FIG. 4 is an example of one scenario in which the teachings of the disclosure are equally applicable to numerous ways of partitioning the NZP CSI-RS resources illustrated in FIG. 3. Further, the specific examples explained herein are with respect to a frequency division duplex (FDD) subframe structure with normal cyclic prefix. However, the teachings of the disclosure are equally applicable to both FDD and time division duplex (TDD) subframe structures, and normal and extended cyclic prefix formats.

In one or more embodiments, wireless device 14 receiving respective CSI-RS REs from the four cells 13 receives the cluster-specific CSI-RS configuration illustrated in FIG. 3 in which the cluster-specific CSI-RS appears to be transmitted from a single cell 13 having eight transmit antennas from wireless device 14's perspective. Wireless device 14 is unaware of the partitioning of radio resources of the CSI-RS configuration, and is therefore unable to distinguish coverage of each cell 13. However, wireless device 14 is informed about the CSI-RS configuration corresponding to the total number of transmit antennas of cluster 15. Therefore, wireless device 14 is "tricked" in that the CSI-RS configuration signals appear to be from a serving cell 13 with eight antennas, in this example, when the CSI-RS configuration signals are actually from four different cells 13 of cluster 15, where each cell 13 has the same cell ID as the other cells 13 in cluster 15. The NZP CSI-RS configuration described herein allows each cell 13 to identify other cells 13 in cluster 15 as the cells 13 which are dominant interferers to its connected wireless device 14.

In one or more embodiments, each cell is configured with an additional CSI-RS configuration such as a ZP CSI-RS configuration. For example, as illustrated in FIG. 3, the additional CSI-RS configuration is a ZP CSI-RS configuration corresponding to a "Number of CSI reference signals configured" of four from Table 1. Each cell 13 in cluster 15 is configured to transmit the ZP CSI-RS REs corresponding to a four CSI-RS port configuration. However, with the ZP CSI-RS configuration of the embodiment of FIG. 3 and of other embodiments discussed herein, wireless device 14 does not experience interference from the other coordinating cells 13 while measuring the CSI. Coordinating cells 13 refer to multiple transmit points, e.g., cells, node, etc., that coordinate downlink and/or uplink transmissions to/from a connected wireless device 14. With the NZP and/or ZP CSI-RS configurations of the embodiment of FIG. 3 and of other embodiments discussed herein, the CSI reported by wireless device 14 represents the achievable SINR with respect to one of cells 13 in cluster 15, i.e., one of the coordinating cells 13. In other words, RRM node 16 receives at least one CSI report associated with a first wireless device 14 in communication with at least one cell 13 of the plurality of cells 13, i.e., cluster 15, in which the at least one CSI report is based at least in part on the transmission of the at least one CSI-RS signal according to one of the partitions of the plurality of partitioned radio resources. In one or more embodiments, signal power is measured with respect to one of coordinating cells 13 and the interference includes the signals received from cells 13 that do not belong to the coordinating cell cluster 15.

FIG. 4 illustrates the cluster specific CSI-RS configuration of FIG. 3, at each cell 13 of cluster 15. In particular, segments (a)-(d) illustrate each cell 13 in cluster 15 having a respective partition of NZP CSI-RS REs of a NZP CSI-RS configuration assigned to it while the remaining partitions are muted. In this embodiment, an additional CSI-RS configuration is assigned to each cell, i.e., the same corresponding ZP CSI-RS REs are assigned to cells 13. For example, segment (a) illustrates cell 13a, provided by node 12a, in which cell 13a transmits on two NZP CSI-RS REs corresponding to CSI-RS ports 15 and 16 while muting the REs for CSI-RS ports 17-22. In other words, cell 13a is configured, by RRM node 16, to mute NZP CSI-RS REs assigned to the other cells 13 in cluster 15, i.e., muting the remaining NZP CSI-RS REs associated with the eight port NZP CSI-RS configuration illustrated in FIG. 3. Further, cell 13a is configured to transmit using assigned ZP CSI-RS REs corresponding to a four port CSI-RS configuration even though, in this example, cell 13a is associated with two transmit antennas. The REs within the physical resource block (PRB) pair can be derived by ($k'$, $l'$) and "nsmod 2" defined in the column for a respective "number of CSI reference signal configured" as illustrated in Table 1.

Also, as illustrated in FIG. 4, segment (b), cell 13b is provided by node 12b in which cell 13b transmits using two NZP CSI-RS REs corresponding to CSI ports 17 and 18 while muting the REs for CSI-RS ports 15, 16 and 19-22. That is, cell 13b is configured, by RRM node 16, to mute NZP CSI-RS REs that are assigned to other cells 13 in cluster 15. In other words, cell 13b mutes the remaining NZP CSI-RS REs associated with the eight port NZP CSI-RS configuration illustrated in FIG. 3. Further, in one or more embodiments, cell 13b is further configured to transmit using assigned ZP CSI-RS REs corresponding to a four port CSI-RS configuration that is also used by the other cells 13 in cluster 15. Similarly, cell 13c and cell 13d are assigned respective NZP CSI-RS REs in which the remaining NZP CSI-RS REs for the eight port CSI-RS configuration are muted as illustrated in segments (c) and (d) of FIG. 4. In one or more embodiments, cell 13c and cell 13d are configured, by RRM node 16, to transmit on assigned ZP CSI-RS REs corresponding to a four port CSI-RS configuration the same as cell 13a and cell 13b. Other NZP CSI-RS configurations may be used in accordance with the disclosure in which the NZP CSI-RS configurations are dependent on the total number of transmit antennas of cluster 15. Each cell 13 will still mute NZP CSI-RS REs assigned to the other nodes of cluster 15, i.e., transmit according to a respective partition of radio resources while muting the radio resources of the remaining plurality of partitioned resources. One way of looking at the partitioning and muting process is that each cell is assigned a respective partition of unmuted radio resources corresponding to a CSI-RS configuration while the partitions of unmuted radio resources that were assigned to other cells are muted at those respective cells. Therefore, in one or more embodiments, the cluster specific CSI-RS configuration that is used for cell coordination provides an efficient method for performing multi-user (MU) MIMO. This type of cluster specific CSI-RS configuration allows wireless device 14 within cluster 15 to report CSI that represents the achievable SINR with respect to the coordinating cell(s) 13 of cluster 15.

A coordination process is illustrated in FIG. 5. In one or more embodiments, the coordination process is embodied as coordination code 26. In particular, the coordination process allows for RRM node 16 to select cells 13 of cluster 15 for future DL transmission by measuring the quality one or more UL signals from wireless device 14 at one or more cells 13 of cluster 15. For example, a receive power on at least one uplink signal such as physical uplink control channel (PUCCH), synchronization reference signal (SRS), physical random access channel (PRACH) and physical uplink shared channel (PUSCH) can be measured by the cells 13 within cluster 15 that received the signals and reported to RRM node 16 to determine the proximity of wireless device 14 to cells 13, thereby allowing for cell selection. In other words, cell 13 uses received uplink signals to determine whether wireless device 14 is within the cell's coverage area. In one or more embodiments, wireless device 14's PUCCH, SRS, PRACH and/or PUSCH configuration is known by the cells 13 in cluster 15.

Referring to Block S108, processing circuitry 32 receives at least one uplink signal associated with wireless device 14, e.g., first wireless device, in communication with at least one cell 13 of cluster 15. Examples of uplink signals are described above. Processing circuitry 32 determines at least one uplink signal quality of the at least one uplink signal at at least one of the plurality of cells (Block 5110). In one or more embodiments, the received power of the uplink signal is measured in dBm. Processing circuitry 32 selects a subset of cells 13 of cluster 15 for downlink transmission to wireless device 14 based on the determined at least one signal quality of the at least on uplink signal at at least one of the plurality of cells (Block S112). For example, wireless device 14a in FIG. 1 may experience significant interference from cell 13c while wireless device 14d that is in communication with serving cell 13d may not experience significant interference from cells 13a and 13c. RRM node 16 will identify dominant interfering cells and/or potential coordinating cells for wireless devices 14a and 14d based on UL received signals from respective devices as described above. In other words, RRM node 16 may select cells 13a and 13c as coordinating cells for wireless device 14a based on the received UL signals. Wireless device 14 is subsequently scheduled for downlink transmission on the selected subset of the plurality of cells 13 as discussed below in FIG. 6.

Referring to FIG. 6, a scheduling process is described. In one or more embodiments, the scheduling process is embodied as scheduling code 28. Processing circuity 32 configures cell 13 for transmission to wireless device 14 based on a ZP CSI-RS and/or NZP CSI-RS configurations to trigger a CSI report, as discussed above with respect to configuration code 24 (Block S114). Processing circuitry 32 selects a subset of the plurality of cells 13 for downlink transmission to wireless device 14 based on at least one uplink signal quality of at least one uplink signal, as discussed in detail with respect to downlink coordination code 26 (Block S116). Processing circuitry 32 schedules downlink transmission to the wireless device on the selected subset of the plurality of cells based on a received CSI report as discussed above with respect to FIG. 2 (Block S117). In one or more embodiments, the scheduled downlink transmission to wireless device 14 is configured to use a subset of the cells 13 in cluster 15 that were selected in Block S112. In other words, in one or more embodiments, the scheduled DL transmission to wireless device is based on the configuration process of configuration code 24 and the coordination process of coordination code 26. The configuration process described herein advantageously allows RRM node 16 to receive CSI reports including RI, CQI and/or PMI such that a precoding, transmit parameters and a number of transmit layers can be determined or adjusted by RRM node 16. In one or more embodiments, precoding of the downlink transmission on the subset of the plurality of cells 13 to wireless device 14 is based on a precoder matrix indication, PMI, received in the at least one CSI report associated with first wireless device 14. Referring to FIG. 1, selected cells 13a and 13c transmit data to wireless device 14a by precoding the data with the reported PMI from wireless device 14a. The transmit antennas of unselected cells 13b and 13d are considered to be "0" in precoding the transmit data for wireless device 14d. For example, the transmit antennas of unselected cells 13b and 13d are muted.

In one or more embodiments, the same radio resources can be reused for DL transmission towards wireless device 14d from cell 13d using CSI feedback received from wireless device 14d. For example, in one or more embodiments, memory 22 contains further instructions that, when executed by the processor 20, configure the processor 20 to determine downlink radio resources of a first subset of the plurality of cells that are muted during transmission to the first wireless device, and schedule downlink transmission to a second wireless device on a second subset of the plurality of cells on the downlink radio resources that are muted. The second subset is a subset of the first subset of the plurality of cells.

Referring to FIG. 7, a cell coordination process is described. In one or more embodiments, the cell coordination process is embodied as cell coordination code 30. Processing circuitry 32 configures a N-transmit antenna CSI RS configuration for cluster 15 of M cells 13 having a total of N transmit antennas, as discussed above with respect to the configuration process in FIG. 2 (Block S118). In one embodiment the total of the antennas, N, in cluster 15 is less than or equal to eight, i.e., the total number of antennas in the M cells is less than or equal to eight. Processing circuitry 32 identifies coordinating cells 13 for one or more wireless devices in communication with at least one cell 13 of cluster 15 by determining the UL received signal quality of at least one signal associated with wireless devices 14, as discussed above with respect to the coordination process in FIG. 5 (Block S120). Processing circuitry 32 receives CSI report from at least one wireless device 14 as discussed above with respect to FIGS. 2 and 3 (Blocks S122). Processing circuitry 32 schedules a set of radio resources for DL transmission on the selected cells 13 for wireless device 14 using CSI report received from wireless device 14 as discussed above with respect to the scheduling process in FIG. 6 (S124). In one or more embodiments, Block S124 is performed for multiple wireless devices 14 in cluster 15 that transmitted CSI report. In one or more embodiments, processing circuitry 32 reuses radio resources for another wireless device 14, in cluster 15, that is served by non-coordinated cells 13 of cluster 15, i.e., wireless device 14a is served by coordinating cells 13a and 13c of cluster 15 while wireless device 14d is served by other coordinating cell 13d of cluster 15 such that these wireless devices may be assigned corresponding radio resources (Block S126). For example, in one or more embodiments, processing circuitry 32 determines downlink radio resources of a first subset of the plurality of cells that are muted during transmission to the first wireless device, and schedules downlink transmission to a second wireless device on a second subset of the plurality of cells on the downlink radio resources that are muted, the second subset being a subset of the first subset of the plurality of cells. Alternatively, Block S126 may be omitted or skipped based on design need.

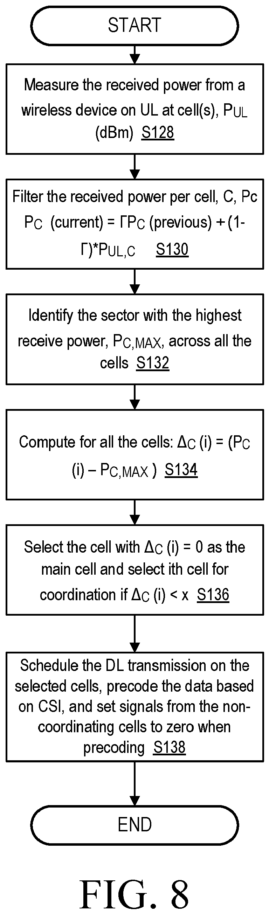

Another coordinating process, which may be embodied as coordination code 26 is described with respect to FIG. 8. Processing circuitry 32 measures the received power, $P_{UL}$ (dBm) from a wireless device on UL at cell 13 in cluster 15 (Block S128). Processing circuitry 32 filters the received power per cell, $P_{UL}$ (Block S130). In one or more embodiments, the filtered power per cell, $P_c$ (dBm) is determined using the following equation: $Pc(current) = \Gamma Pc$ (previous) + $(1-\Gamma)*P_{UL,C}$, where $\Gamma$ is a filtering parameter that ranges between zero and one. The function of filtering of the received power may be performed either in the linear domain or dB domain. Processing circuitry 32 identifies the sector or cell with the highest received power, $P_{C,MAX}$, across all the cells 13 in cluster 15 (Block S132). Processing circuitry 32 computes the received power offset, $\Delta c$ (i) (dBm), for all the cells i with respect to the cell with maximum power: $\Delta c$ (i) = $(Pc(i)-P_{C,MAX})$ (Block S134). Processing circuitry 32 selects cell 13 with $\Delta c$ (i) = 0 as the main cell 13 and selects ith cell 13 for coordination if $\Delta c$ (i) < x (Block S136). In particular, x is a threshold in dB for deciding other cells for coordination in which x is selected such that the coordination gain is maximized without wasting radio resources at the coordinating cells. The main cell 13 and selected cell(s) 13 form the coordinating cells 13 of cluster 15 for a specific wireless device 14. Processing circuitry 32 schedules the DL transmission on selected cells 13 and precodes the data based on CSI, and sets signals from the non-coordinating cells 13, i.e., of the cells 13 of cluster 15, to zero when precoding (Block S138). In one or more embodiments, precoding of the downlink transmission on the subset of the plurality of cells 13 to wireless device 14 is based on a precoder matrix indication, PMI, received in the at least one CSI report associated with first wireless device 14.

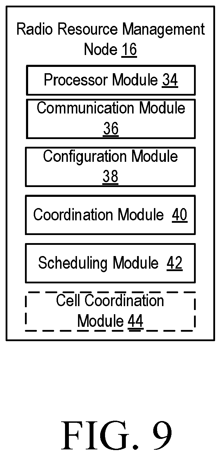

Referring to FIG. 9, another exemplary RRM node 16 is illustrated. RRM node 16 includes processor module 34 for performing RRM node 16 functions described herein with respect to processing circuitry 32. RRM node 16 includes communication module 36 for performing communications functions described herein with respect to communication interface 18. Further, RRM node 16 includes configuration module 38 for performing the configuration process described in detail with respect to configuration code 24 and FIG. 2. RRM node 16 includes coordination module 40 for performing the coordination process described in detail with respect to coordination code 26 and FIG. 5. RRM node 16 further includes scheduling module 42 for performing the scheduling process that is described in detail with respect to scheduling code 28 and FIG. 6. In one or more embodiments, configuration module 38, coordination module 40 and scheduling module 42 are replaced by cell coordination module 44 that performs the cell coordination process of cell coordination code 30 described with respect to FIG. 7.

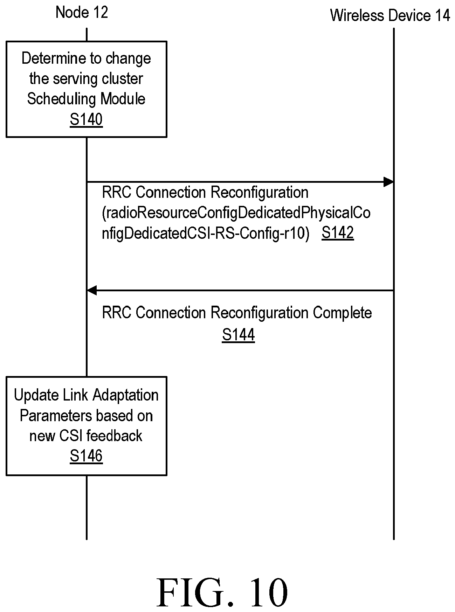

A process for radio resource control (RRC) signaling during transition between cells 13 of different sub-clusters of cluster 15 is described with respect to FIG. 10. In particular, when a total number of antennas across all cells 13 within cluster 15 exceeds eight, multiple cluster specific CSI-RS configurations can be used by splitting cluster 15 into sub-clusters with a maximum of eight total number of antennas per subcluster. For example, in one embodiment, cells 13a and 13b may be split into a subcluster having eight antennas as each of cells 13a and 13b, in this example, have four transmit antennas. Further, cells 13c and 13d form another subcluster having a maximum of eight antennas.

The maximum of eight total number of antennas per cluster 15/subcluster is based on 3GPP standards that define a maximum number of eight antenna ports for certain transmission modes, e.g., TM 9. Respective CSI-RS configurations with eight transmit antennas are assigned per subcluster as discussed in FIG. 2 in which RRC signaling is required to notify wireless device 14 transitioning between subclusters. In particular, node 12 makes a determination to change serving cluster 15 such as based on signal quality (Block S140). Node 12 causes an RRC connection reconfiguration message to be transmitted to wireless device 14 in order to notify wireless device 14 of the transition, e.g., to notify the wireless device of the cluster-specific CSI-RS of the new subcluster (Block S142). Wireless device 14 responds to the RRC connection reconfiguration message by sending an RRC connection reconfiguration complete message (Block S144). Node 12 updates the link adaption parameters back on new CSI feedback, i.e., new CSI report (Block S146). The new CSI feedback from the wireless device 14 is based on the cluster specific CSI-RS and, in one embodiment, the additional CSI-RS from the new subcluster that wireless device 14 has transitioned to. If the number of transmit antennas for cluster 15 does not exceed eight, then no explicit RRC messaging is required during the cell transition.

Therefore, the cluster-specific CSI-RS configuration advantageously allows the wireless device to report CSI that represents the achievable signal-to-interference plus noise ratio (SINR) with respect to one of the coordinating cells, thereby increasing the reliability of the CSI.

As will be appreciated by one of skill in the art, the concepts described herein may be embodied as a method, data processing system, and/or computer program product. Accordingly, the concepts described herein may take the form of an entirely hardware embodiment, an entirely software embodiment or an embodiment combining software and hardware aspects all generally referred to herein as a "circuit" or "module." Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Java® or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments. Accordingly, all embodiments can be combined in any way and/or combination, and the present specification, including the drawings, shall be construed to constitute a complete written description of all combinations and subcombinations of the embodiments described herein, and of the manner and process of making and using them.

In addition, unless mention was made above to the contrary, it should be noted that all of the accompanying drawings are not to scale. The invention is defined by the appended claims.

## Claims

1. A node (16) for managing cell coordination, comprising:
   processing circuitry (32), the processing circuitry (32) including a processor (20), and a memory (22), the memory (22) containing instructions that, when executed by the processor (20), configure the processor (20) to:

   determine a cluster (15) of a plurality of cells (13) including a first cell (13), wherein each of the plurality of cells (13) of the cluster (15) has a same cellular identification, Cell ID, the cluster (15) of the plurality of cells (13) having a plurality of antennas;

determine a channel state information reference signal, CSI-RS, configuration corresponding to a total number of the plurality of antennas, wherein same CSI-RS configuration is used in the plurality of cells (13) of the cluster (15);

partition radio resources corresponding to the CSI-RS configuration into a plurality of partitioned radio resources; cause the first cell (13) to transmit at least one CSI-RS signal according to a first partition of the plurality of partitioned radio resources while muting the radio resources of the remaining plurality of partitioned resources, receive at least one CSI report associated with a first wireless device (14) in communication with at least one cell (13) of the plurality of cells (13), the at least one CSI report being based at least in part on the transmission of at least one CSI-RS signal according to one of the partitions of the plurality of partitioned radio resources; and schedule downlink transmission to the first wireless device (14) based at least in part on the received at least one CSI report.

2. The node (16) of Claim 1,
wherein the first partition of the plurality of partitioned radio resources comprises a number of unmuted radio resources equal to a number of transmit antennas of the first cell (13).

3. The node (16) of Claim 1, wherein the memory (22) contains further instructions that, when executed by the processor (20), configure the processor (20) to:

determine a zero power, ZP, CSI-RS configuration based on a number of CSI-RS signals to be transmitted by the plurality of cells;
configure radio resources at each of the plurality of cells to transmit according to the ZP CSI-RS configuration; and the determined CSI-RS configuration corresponding to the total number of the plurality of antennas being a non-zero power, NZP, CSI-RS configuration.

4. The node (16) of Claim 1, wherein the plurality of cells (13) includes a second cell; and the memory (22) containing further instructions that,
when executed by the processor (20), configure the processor (20) to cause the second cell (13) to transmit at least one CSI-RS signal according to a second partition of the plurality of partitioned radio resources while muting the radio resources of the remaining plurality of partitions resources, the second partition being different from the first partition.

5. The node (16) of Claim 1, wherein the at least one CSI report includes at least one of channel-quality indication, CQI, precoder matrix indication, PMI, and rank indication, RI.

6. The node (16) of Claim 1, wherein the memory (22) contains further instructions that, when executed by the processor (20), configure the processor (20) to: receive at least one uplink signal associated with the first wireless device (14) in communication with at least one of the plurality of cells (13); determine at least one uplink signal quality of the at least one uplink signal at atleast one of the plurality of cells; select a subset of the plurality of cells (13) for downlink transmission to the first wireless device (14) based on the determined at least one uplink signal quality of the at least one uplink signal at at least one of the plurality of cells; and schedule downlink transmission to the first wireless device (14) on the selected subset of the plurality of cells (13).

7. The node (16) of Claim 6, wherein the memory (22) contains further instructions that, when executed by the processor (20), configure the processor (20) to:

precode the downlink transmission to the first wireless device on first radio resources on the subset of the plurality of cells (13) based on a precoder matrix indication, PMI, received in the at least one CSI report associated with the first wireless device (14); and
mute the first radio resources on the remaining plurality of cells (13) to the first wireless device (14).

8. The node (16) of Claim 6, wherein the memory (22) contains further instructions that, when executed by the processor (20), configure the processor (20) to: determine downlink radio resources of at least one of the plurality of cells that are muted during the scheduled downlink transmission to the first wireless device on the selected subset of the plurality of cells; and schedule downlink transmission to a second wireless device on the at least one of the plurality of cells that are muted.

9. A method for managing cell coordination, the method performed by a node (16), the method comprising:

determining a cluster (15) of a plurality of cells including a first cell, wherein each of the plurality of cells (13) of the cluster (15) has a same cellular identification, Cell ID, the cluster (15) of the plurality of cells having a plurality of antennas (S100);

determining a channel state information reference signal, CSI-RS, configuration corresponding to a total number of the plurality of antennas (S102) wherein same CSI-RS configuration is used in the plurality of cells (13) of the cluster (15);

partitioning radio resources corresponding to the CSI-RS configuration into a plurality of partitioned radio resources (S104);

causing the first cell to transmit at least one CSI-RS signal according to a first partition of the plurality of partitioned radio resources while muting the radio resources of the remaining plurality of partitioned resources (S106);

receiving at least one CSI report associated with a first wireless device in communication with at least one cell of the plurality of cells, the at least one CSI report being based at least in part on the transmission of the at least one CSI-RS signal according to one of the partitions of the plurality of partitioned radio resources (S122); and

scheduling downlink transmission to the first wireless device based at least in part on the received at least one CSI report.

10. The method of Claim 9,
   wherein the first partition of the plurality of partitioned radio resources comprises a number of unmuted radio resources equal to at least a number of transmit antennas of the first cell.

11. The method of Claim 9, further comprising:

   determining a zero power, ZP, CSI-RS configuration based on a number of CSI-RS signals to be transmitted by the plurality of cells;
   configuring radio resources at each of the plurality of cells to transmit according to the ZP CSI-RS configuration; and
   the determined CSI-RS configuration corresponding to the total number of the 1s plurality of antennas being a non-zero power, NZP, CSI-RS configuration.

12. The method of Claim 9,

   wherein the plurality of cells includes a second cell; and
   the method further comprises causing the second cell to transmit at least one CSI-RS signal according to a second partition of the plurality of partitioned radio resources while muting the radio resources of the remaining plurality of partitions resources, the second partition being different from the first partition (S106).

13. The method of Claim 9, wherein the at least one CSI report includes at least one of channel-quality indication, CQI, precoder matrix indication, PMI, and rank indication, RI.

14. The method of Claim 9, further comprising:

   precoding the downlink transmission to the first wireless device on first radio resources on the subset of the plurality of cells based on a precoder matrix indication, PMI, received in the at least one CSI report associated with the first wireless device; and
   muting the first radio resources on the remaining plurality of cells to the first wireless device.

15. A computer readable storage medium (22) storing executable instructions for managing cell coordination, which when executed by a computer, cause the computer to:

   determine a cluster (15) of a plurality of cells (13) including a first cell (13), wherein each of the plurality of cells (13) of the cluster (15) has a same cellular identification, Cell ID, the cluster (15) of the plurality of cells (13) having a plurality of antennas;
   determine a channel state information reference signal, CSI-RS, configuration corresponding to a total number of the plurality of antennas, wherein same CSI-RS configuration is used in the plurality of cells (13) of the cluster (15);
   partition radio resources corresponding to the CSI-RS configuration into a plurality of partitioned radio resources; and
   cause the first cell (13) to transmit at least one CSI-RS signal according to a first partition of the plurality of partitioned radio resources while muting the radio resources of the remaining plurality of partitioned resources; receive at least one CSI report associated with a first wireless device in communication with at least one cell of the plurality of cells, the at least one CSI report being based at least in part on the transmission of the at least one CSI-RS signal according to one of the partitions of the plurality of partitioned radio resources (S122); and scheduling downlink transmission to the first wireless device based at least in part on the received at least one CSI report.

**Patentansprüche**

1. Knoten (16) zum Verwalten von Zellkoordination, umfassend:
   Verarbeitungsschaltlogik (32), wobei die Verarbeitungsschaltlogik (32) einen Prozessor (20) und einen Speicher (22) einschließt, wobei der Speicher (22) Anweisungen enthält, die, wenn sie durch den Prozessor (20) ausgeführt werden, den Prozessor (20) konfigurieren zum:

   Bestimmen eines Clusters (15) einer Vielzahl von Zellen (13), einschließlich einer ersten Zelle (13), wobei jede der Vielzahl von Zellen (13) des Clusters (15) eine gleiche Zellidentifikation, Zell-ID, aufweist, wobei der Cluster (15) der Vielzahl von Zellen (13) eine Vielzahl von Antennen aufweist;
   Bestimmen einer Konfiguration eines Kanalzustandsinformationsreferenzsignals, CSI-RS-Konfiguration, entsprechend einer Gesamtzahl der Vielzahl von Antennen, wobei die gleiche CSI-RS-Konfiguration in der Vielzahl von Zellen (13) des Clusters (15) verwendet wird;
   Partitionieren von Funkressourcen, die der CSI-RS-Konfiguration entsprechen, in eine Vielzahl von partitionierten Funkressourcen;
   Veranlassen, dass die erste Zelle (13) mindestens ein CSI-RS-Signal gemäß einer ersten Partition der Vielzahl von partitionierten Funkressourcen überträgt, während die Funkressourcen der verbleibenden Vielzahl von partitionierten Ressourcen stummgeschaltet werden,
   Empfangen mindestens eines CSI-Berichts, der einer ersten drahtlosen Vorrichtung (14) in Kommunikation mit mindestens einer Zelle (13) der Vielzahl von Zellen (13) zugeordnet ist, wobei der mindestens eine CSI-Bericht mindestens teilweise auf der Übertragung von mindestens einem CSI-RS-Signal gemäß einer der Partitionen der Vielzahl von partitionierten Funkressourcen basiert; und
   Planen einer Downlink-Übertragung an die erste drahtlose Vorrichtung (14) basierend mindestens teilweise auf dem empfangenen mindestens einen CSI-Bericht.

2. Knoten (16) nach Anspruch 1,
   wobei die erste Partition der Vielzahl von partitionierten Funkressourcen eine Anzahl von nicht stummgeschalteten Funkressourcen umfasst, die gleich einer Anzahl von Sendeantennen der ersten Zelle (13) sind.

3. Knoten (16) nach Anspruch 1, wobei der Speicher (22) weitere Anweisungen enthält, die, wenn sie durch den Prozessor (20) ausgeführt werden, den Prozessor (20) konfigurieren zum:

   Bestimmen einer Nullleistungs-CSI-RS-Konfiguration, ZP-CSI-RS-Konfiguration, basierend auf einer Anzahl von CSI-RS-Signalen, die durch die Vielzahl von Zellen übertragen werden sollen;
   Konfigurieren von Funkressourcen an jeder der Vielzahl von Zellen, die gemäß der ZP CSI- RS-Konfiguration zu übertragen sind; und
   wobei die bestimmte CSI-RS-Konfiguration der Gesamtzahl der Vielzahl von Antennen entspricht, die eine Nicht-Nullleistungs-CSI-RS-Konfiguration, NZP CSI-RS-Konfiguration, ist.

4. Knoten (16) nach Anspruch 1, wobei die Vielzahl von Zellen (13) eine zweite Zelle einschließt; und wobei der Speicher (22) weitere Anweisungen enthält, die,
   wenn sie durch den Prozessor (20) ausgeführt werden, den Prozessor (20) konfigurieren zum Veranlassen, dass die zweite Zelle (13) mindestens ein CSI-RS-Signal gemäß einer zweiten Partition der Vielzahl von partitionierten Funkressourcen überträgt, während die Funkressourcen der verbleibenden Vielzahl von partitionierten Ressourcen stummgeschaltet werden, wobei sich die zweite Partition von der ersten Partition unterscheidet.

5. Knoten (16) nach Anspruch 1, wobei der mindestens eine CSI-Bericht mindestens eines von Kanalqualitätsangabe, CQI, Vorcodierer-Matrixangabe, PMI, und Rangangabe, RI, einschließt.

6. Knoten (16) nach Anspruch 1, wobei der Speicher (22) weitere Anweisungen enthält, die, wenn sie durch den Prozessor (20) ausgeführt werden, den Prozessor (20) konfigurieren zum: Empfangen mindestens eines Uplink-Signals, das der ersten drahtlosen Vorrichtung (14) zugeordnet ist, in Kommunikation mit mindestens einer der Vielzahl von Zellen (13); Bestimmen mindestens einer Uplink-Signalqualität des mindestens einen Uplink-Signals an mindestens einer der Vielzahl von Zellen; Auswählen einer Teilmenge der Vielzahl von Zellen (13) zur Downlink-Übertragung an die erste drahtlose Vorrichtung (14) basierend auf der bestimmten mindestens einen Uplink-Signalqualität des mindestens einen Uplink-Signals an mindestens einer der Vielzahl von Zellen; und Planen der Downlink-Übertragung an die erste drahtlose Vorrichtung (14) auf der ausgewählten Teilmenge der Vielzahl von Zellen (13).

7. Knoten (16) nach Anspruch 6, wobei der Speicher (22) weitere Anweisungen enthält, die, wenn sie durch den Prozessor (20) ausgeführt werden, den Prozessor (20) konfigurieren zum:

   Vorcodieren der Downlink-Übertragung an die erste drahtlose Vorrichtung auf ersten Funkressourcen auf der Teilmenge der Vielzahl von Zellen (13) basierend auf einer Vorcodierer-Matrixangabe, PMI, die in dem mindestens einen CSI-Bericht empfangen wird, der der ersten drahtlosen Vorrichtung (14) zugeordnet ist; und Stummschalten der ersten Funkressourcen auf der verbleibenden Vielzahl von Zellen (13) an die erste drahtlose Vorrichtung (14).

8. Knoten (16) nach Anspruch 6, wobei der Speicher (22) weitere Anweisungen enthält, die, wenn sie durch den Prozessor (20) ausgeführt werden, den Prozessor (20) konfigurieren zum: Bestimmen von Downlink-Funkressourcen von mindestens einer der Vielzahl von Zellen, die während der geplanten Downlink-Übertragung an die erste drahtlose Vorrichtung auf der ausgewählten Teilmenge der Vielzahl von Zellen stummgeschaltet sind; und Planen der Downlink-Übertragung an eine zweite drahtlose Vorrichtung auf der mindestens einen der Vielzahl von Zellen, die stummgeschaltet sind.

9. Verfahren zum Verwalten von Zellkoordination, wobei das Verfahren durch einen Knoten (16) durchgeführt wird, wobei das Verfahren umfasst:

   Bestimmen eines Clusters (15) einer Vielzahl von Zellen, einschließlich einer ersten Zelle, wobei jede der Vielzahl von Zellen (13) des Clusters (15) eine gleiche Zellidentifikation, Zell-ID, aufweist, wobei der Cluster (15) der Vielzahl von Zellen eine Vielzahl von Antennen aufweist (S100);
   Bestimmen einer Konfiguration eines Kanalzustandsinformationsreferenzsignals, CSI-RS-Konfiguration, entsprechend einer Gesamtzahl der Vielzahl von Antennen (S102), wobei die gleiche CSI-RS-Konfiguration in der Vielzahl von Zellen (13) des Clusters (15) verwendet wird;
   Partitionieren von Funkressourcen, die der CSI-RS-Konfiguration entsprechen, in eine Vielzahl von partitionierten Funkressourcen (S104);
   Veranlassen, dass die erste Zelle mindestens ein CSI-RS-Signal gemäß einer ersten Partition der Vielzahl von partitionierten Funkressourcen überträgt, während die Funkressourcen der verbleibenden Vielzahl von partitionierten Ressourcen stummgeschaltet werden (S106);
   Empfangen mindestens eines CSI-Berichts, der einer ersten drahtlosen Vorrichtung in Kommunikation mit mindestens einer Zelle der Vielzahl von Zellen zugeordnet ist, wobei der mindestens eine CSI-Bericht mindestens teilweise auf der Übertragung des mindestens einen CSI-RS-Signals gemäß einer der Partitionen der Vielzahl von partitionierten Funkressourcen basiert (S122); und
   Planen der Downlink-Übertragung an die erste drahtlose Vorrichtung basierend mindestens teilweise auf dem empfangenen mindestens einen CSI-Bericht.

10. Verfahren nach Anspruch 9, wobei die erste Partition der Vielzahl von partitionierten Funkressourcen eine Anzahl von nicht stummgeschalteten Funkressourcen umfasst, die gleich mindestens einer Anzahl von Sendeantennen der ersten Zelle sind.

11. Verfahren nach Anspruch 9, ferner umfassend:

    Bestimmen einer Nullleistungs-CSI-RS-Konfiguration, ZP-CSI-RS-Konfiguration, basierend auf einer Anzahl von CSI-RS-Signalen, die durch die Vielzahl von Zellen übertragen werden sollen;
    Konfigurieren von Funkressourcen an jeder der Vielzahl von Zellen, die gemäß der ZP-CSI- RS-Konfiguration zu übertragen sind; und
    wobei die bestimmte CSI-RS-Konfiguration der Gesamtzahl der ist Vielzahl von Antennen entspricht, die eine Nicht-Nullleistungs-CSI-RS-Konfiguration, NZP CSI-RS-Konfiguration, ist.

**12.** Verfahren nach Anspruch 9, wobei die Vielzahl von Zellen eine zweite Zelle einschließt; und das Verfahren ferner ein Veranlassen umfasst, dass die zweite Zelle mindestens ein CSI-RS-Signal gemäß einer zweiten Partition der Vielzahl von partitionierten Funkressourcen überträgt, während die Funkressourcen der verbleibenden Vielzahl von partitionierten Ressourcen stummgeschaltet werden, wobei sich die zweite Partition von der ersten Partition unterscheidet (S106).

**13.** Verfahren nach Anspruch 9, wobei der mindestens eine CSI-Bericht mindestens eines von Kanalqualitätsangabe, CQI, Vorcodierer-Matrixangabe, PMI, und Rangangabe, RI, einschließt.

**14.** Verfahren nach Anspruch 9, ferner umfassend:

Vorcodieren der Downlink-Übertragung an die erste drahtlose Vorrichtung auf ersten Funkressourcen auf der Teilmenge der Vielzahl von Zellen basierend auf einer Vorcodierer-Matrixangabe, PMI, die in dem mindestens einen CSI-Bericht empfangen wird, der der ersten drahtlosen Vorrichtung zugeordnet ist; und

Stummschalten der ersten Funkressourcen auf der verbleibenden Vielzahl von Zellen an die erste drahtlose Vorrichtung.

**15.** Computerlesbares Speichermedium (22), das ausführbare Anweisungen zum Verwalten von Zellenkoordination speichert, die, wenn sie durch einen Computer ausgeführt werden, den Computer veranlassen zum:

Bestimmen eines Clusters (15) einer Vielzahl von Zellen (13), einschließlich einer ersten Zelle (13), wobei jede der Vielzahl von Zellen (13) des Clusters (15) eine gleiche Zellidentifikation, Zell-ID, aufweist, wobei der Cluster (15) der Vielzahl von Zellen (13) eine Vielzahl von Antennen aufweist;

Bestimmen einer Konfiguration eines Kanalzustandsinformationsreferenzsignals, CSI-RS-Konfiguration, entsprechend einer Gesamtzahl der Vielzahl von Antennen, wobei die gleiche CSI-RS-Konfiguration in der Vielzahl von Zellen (13) des Clusters (15) verwendet wird;

Partitionieren von Funkressourcen, die der CSI-RS-Konfiguration entsprechen, in eine Vielzahl von partitionierten Funkressourcen; und

Veranlassen, dass die erste Zelle (13) mindestens ein CSI-RS-Signal gemäß einer ersten Partition der Vielzahl von partitionierten Funkressourcen überträgt, während die Funkressourcen der verbleibenden Vielzahl von partitionierten Ressourcen stummgeschaltet werden;

Empfangen mindestens eines CSI-Berichts, der einer ersten drahtlosen Vorrichtung in Kommunikation mit mindestens einer der Vielzahl von Zellen zugeordnet ist, wobei der mindestens eine CSI-Bericht mindestens teilweise auf der Übertragung des mindestens einen CSI-RS-Signals gemäß einer der Partitionen der Vielzahl von partitionierten Funkressourcen basiert (S122); und

Planen der Downlink-Übertragung an die erste drahtlose Vorrichtung basierend mindestens teilweise auf dem empfangenen mindestens einen CSI-Bericht.

**Revendications**

**1.** Noeud (16) permettant de gérer une coordination de cellules, comprenant :
un circuit de traitement (32), le circuit de traitement (32) comportant un processeur (20), et une mémoire (22), la mémoire (22) contenant des instructions qui, lorsqu'elles sont exécutées par le processeur (20), configurent le processeur (20) pour :

déterminer une grappe (15) d'une pluralité de cellules (13) comportant une première cellule (13), dans lequel chacune parmi la pluralité de cellules (13) de la grappe (15) a une même identification cellulaire, Cell ID, la grappe (15) de la pluralité de cellules (13) ayant une pluralité d'antennes ;

déterminer une configuration de signal de référence d'information d'état de canal, CSI-RS, correspondant à un nombre total de la pluralité d'antennes, dans lequel une même configuration CSI-RS est utilisée dans la pluralité de cellules (13) de la grappe (15) ;

partitionner des ressources radio correspondant à la configuration CSI-RS en une pluralité de ressources radio partitionnées ;

amener la première cellule (13) à transmettre au moins un signal CSI-RS selon une première partition de la pluralité de ressources radio partitionnées tout en inhibant les ressources radio de la pluralité restante de ressources partitionnées,

recevoir au moins un rapport CSI associé à un premier dispositif sans fil (14) en communication avec au moins une cellule (13) de la pluralité de cellules (13), l'au moins un rapport CSI étant basé au moins en partie sur la transmission d'au moins un signal CSI-RS selon l'une des partitions de la pluralité de ressources radio partitionnées ; et

planifier une transmission en liaison descendante vers le premier dispositif sans fil (14) en fonction au moins en partie de l'au moins un rapport CSI reçu.

**2.** Noeud (16) selon la revendication 1,
dans lequel la première partition de la pluralité de ressources radio partitionnées comprend un nombre de ressources radio non inhibées égal à un nombre d'antennes de transmission de la première cellule (13).

**3.** Noeud (16) selon la revendication 1, dans lequel la mémoire (22) contient d'autres instructions qui, lorsqu'elles sont exécutées par le processeur (20), configurent le processeur (20) pour :

déterminer une configuration CSI-RS de puissance nulle, ZP, CSI-RS en fonction d'un nombre de signaux CSI-RS à transmettre par la pluralité de cellules ;
configurer des ressources radio au niveau de chacune parmi la pluralité de cellules pour transmettre selon la configuration CSI-RS ZP ; et
la configuration CSI-RS déterminée correspondant au nombre total de la pluralité d'antennes étant une configuration CSI-RS de puissance non nulle, NZP.

**4.** Noeud (16) selon la revendication 1, dans lequel la pluralité de cellules (13) comporte une seconde cellule ; et la mémoire (22) contenant d'autres instructions qui,
lorsqu'elles sont exécutées par le processeur (20), configurent le processeur (20) pour amener la seconde cellule (13) à transmettre au moins un signal CSI-RS selon une seconde partition de la pluralité de ressources radio partitionnées tout en inhibant les ressources radio de la pluralité restante de ressources de partitions, la seconde partition étant différente de la première partition.

**5.** Noeud (16) selon la revendication 1, dans lequel l'au moins un rapport CSI comporte au moins l'une parmi une indication de qualité de canal, CQI, une indication de matrice de précodeur, PMI, et une indication de rang, RI.

**6.** Noeud (16) selon la revendication 1, dans lequel la mémoire (22) contient d'autres instructions qui, lorsqu'elles sont exécutées par le processeur (20), configurent le processeur (20) pour : recevoir au moins un signal de liaison montante associé au premier dispositif sans fil (14) en communication avec au moins l'une parmi la pluralité de cellules (13) ; déterminer au moins une qualité de signal de liaison montante de l'au moins un signal de liaison montante au niveau d'au moins l'une parmi la pluralité de cellules ; sélectionner un sous-ensemble de la pluralité de cellules (13) pour une transmission en liaison descendante vers le premier dispositif sans fil (14) en fonction de l'au moins une qualité de signal de liaison montante déterminée de l'au moins un signal de liaison montante au niveau d'au moins l'une parmi la pluralité de cellules ; et planifier une transmission en liaison descendante vers le premier dispositif sans fil (14) sur le sous-ensemble sélectionné de la pluralité de cellules (13).

**7.** Noeud (16) selon la revendication 6, dans lequel la mémoire (22) contient d'autres instructions qui, lorsqu'elles sont exécutées par le processeur (20), configurent le processeur (20) pour :

précoder la transmission en liaison descendante vers le premier dispositif sans fil sur des premières ressources radio sur le sous-ensemble de la pluralité de cellules (13) en fonction d'une indication de matrice de précodeur, PMI, reçue dans l'au moins un rapport CSI associé au premier dispositif sans fil (14) ; et
inhiber les premières ressources radio sur la pluralité restante de cellules (13) vers le premier dispositif sans fil (14).

**8.** Noeud (16) selon la revendication 6, dans lequel la mémoire (22) contient d'autres instructions qui, lorsqu'elles sont exécutées par le processeur (20), configurent le processeur (20) pour : déterminer des ressources radio de liaison descendante d'au moins l'une parmi la pluralité de cellules qui sont inhibées pendant la transmission en liaison descendante planifiée vers le premier dispositif sans fil sur le sous-ensemble sélectionné de la pluralité de cellules ; et planifier une transmission en liaison descendante vers un second dispositif sans fil sur l'au moins une parmi la pluralité de cellules qui sont inhibées.

**9.** Procédé permettant de gérer une coordination de cellules, le procédé mis en oeuvre par un noeud (16), le procédé comprenant :

la détermination d'une grappe (15) d'une pluralité de cellules comportant une première cellule, dans lequel chacune parmi la pluralité de cellules (13) de la grappe (15) a une même identification cellulaire, Cell ID, la grappe (15) de la pluralité de cellules ayant une pluralité d'antennes (S100) ;

la détermination d'une configuration de signal de référence d'information d'état de canal, CSI-RS, correspondant à un nombre total de la pluralité d'antennes (S102), dans lequel une même configuration CSI-RS est utilisée dans la pluralité de cellules (13) de la grappe (15) ;

le partitionnement de ressources radio correspondant à la configuration CSI-RS en une pluralité de ressources radio partitionnées (S104) ;

le fait d'amener la première cellule à transmettre au moins un signal CSI-RS selon une première partition de la pluralité de ressources radio partitionnées tout en inhibant les ressources radio de la pluralité restante de ressources partitionnées (S106) ;

la réception d'au moins un rapport CSI associé à un premier dispositif sans fil en communication avec au moins une cellule de la pluralité de cellules, l'au moins un rapport CSI étant basé au moins en partie sur la transmission de l'au moins un signal CSI-RS selon l'une des partitions de la pluralité de ressources radio partitionnées (S122) ; et

la planification d'une transmission en liaison descendante vers le premier dispositif sans fil en fonction au moins en partie de l'au moins un rapport CSI reçu.

10. Procédé selon la revendication 9, dans lequel la première partition de la pluralité de ressources radio partitionnées comprend un nombre de ressources radio non inhibées égal à au moins un nombre d'antennes de transmission de la première cellule.

11. Procédé selon la revendication 9, comprenant en outre :

la détermination d'une configuration CSI-RS de puissance nulle, ZP, CSI-RS en fonction d'un nombre de signaux CSI-RS à transmettre par la pluralité de cellules ;

la configuration de ressources radio au niveau de chacune parmi la pluralité de cellules pour transmettre selon la configuration CSI-RS ZP ; et

la configuration CSI-RS déterminée correspondant au nombre total de la pluralité 1s d'antennes étant une configuration CSI-RS de puissance non nulle, NZP.

12. Procédé selon la revendication 9, dans lequel la pluralité de cellules comporte une seconde cellule ; et le procédé comprend en outre le fait d'amener la seconde cellule à transmettre au moins un signal CSI-RS selon une seconde partition de la pluralité de ressources radio partitionnées tout en inhibant les ressources radio de la pluralité restante de ressources de partitions, la seconde partition étant différente de la première partition (S106).

13. Procédé selon la revendication 9, dans lequel l'au moins un rapport CSI comporte au moins l'une parmi une indication de qualité de canal, CQI, une indication de matrice de précodeur, PMI, et une indication de rang, RI.

14. Procédé selon la revendication 9, comprenant en outre :

le précodage de la transmission en liaison descendante vers le premier dispositif sans fil sur des premières ressources radio sur le sous-ensemble de la pluralité de cellules en fonction d'une indication de matrice de précodeur, PMI, reçue dans l'au moins un rapport CSI associé au premier dispositif sans fil ; et

l'inhibition des premières ressources radio sur la pluralité restante de cellules vers le premier dispositif sans fil.

15. Support de stockage lisible par ordinateur (22) stockant des instructions exécutables pour gérer une coordination de cellules, qui lorsqu'elles sont exécutées par un ordinateur, amènent l'ordinateur à :

déterminer une grappe (15) d'une pluralité de cellules (13) comportant une première cellule (13), dans lequel chacune parmi la pluralité de cellules (13) de la grappe (15) a une même identification cellulaire, Cell ID, la grappe (15) de la pluralité de cellules (13) ayant une pluralité d'antennes ;

déterminer une configuration de signal de référence d'information d'état de canal, CSI-RS, correspondant à un nombre total de la pluralité d'antennes, dans lequel une même configuration CSI-RS est utilisée dans la pluralité de cellules (13) de la grappe (15) ;

partitionner des ressources radio correspondant à la configuration CSI-RS en une pluralité de ressources radio partitionnées ; et

amener la première cellule (13) à transmettre au moins un signal CSI-RS selon une première partition de la pluralité de ressources radio partitionnées tout en inhibant les ressources radio de la pluralité restante de ressources partitionnées ;

recevoir au moins un rapport CSI associé à un premier dispositif sans fil en communication avec au moins une cellule de la pluralité de cellules, l'au moins un rapport CSI étant basé au moins en partie sur la transmission de l'au moins un signal CSI-RS selon l'une des partitions de la pluralité de ressources radio partitionnées (S122) ; et

planifier une transmission en liaison descendante vers le premier dispositif sans fil en fonction au moins en partie de l'au moins un rapport CSI reçu.

FIG. 1

```
                    ┌─────────────────────────┐
                    │          START          │
                    └─────────────────────────┘
                                 │
                                 ▼
          ┌──────────────────────────────────────────┐
          │ Determine a cluster including a plurality │
          │   of cells, the cluster of the plurality  │
          │    of cells having a plurality of antennas │
          │                   S100                    │
          └──────────────────────────────────────────┘
                                 │
                                 ▼
          ┌──────────────────────────────────────────┐
          │   Determine a channel state information   │
          │  reference signal, CSI-RS, configuration  │
          │  corresponding to a total number of the   │
          │        plurality of antennas S102         │
          └──────────────────────────────────────────┘
                                 │
                                 ▼
          ┌──────────────────────────────────────────┐
          │ Partition radio resources corresponding   │
          │     to the CSI-RS configuration into a    │
          │  plurality of partitioned radio resources │
          │                   S104                    │
          └──────────────────────────────────────────┘
                                 │
                                 ▼
          ┌──────────────────────────────────────────┐
          │   Cause the cell to transmit at least one  │
          │       CSI-RS signal according to a first  │
          │  partition of the plurality of partitioned│
          │ radio resources while muting the radio    │
          │ resources of the remaining plurality of   │
          │      partitioned resources S106           │
          └──────────────────────────────────────────┘
                                 │
                                 ▼
                    ┌─────────────────────────┐
                    │           END           │
                    └─────────────────────────┘
```

# FIG. 2

FIG. 3

FIG. 4

```
                    ┌─────────────────────┐
                    │        START        │
                    └─────────────────────┘
                               │
                               ▼
        ┌──────────────────────────────────────────────┐
        │      Receive at least one uplink signal       │
        │  associated with the first wireless device    │
        │   in communication with at least one of       │
        │      the plurality of cells  S108             │
        └──────────────────────────────────────────────┘
                               │
                               ▼
        ┌──────────────────────────────────────────────┐
        │     Determine at least one uplink signal      │
        │  quality of the at least one uplink signal    │
        │    at at least one of the plurality of cells  │
        │                   S110                        │
        └──────────────────────────────────────────────┘
                               │
                               ▼
        ┌──────────────────────────────────────────────┐
        │   Select a subset of the plurality of cells   │
        │    for downlink transmission to the first     │
        │          wireless device based on the         │
        │   determined at least one uplink signal       │
        │  quality of the at least one uplink signal    │
        │   at at least one of the plurality of cells   │
        │                   S112                        │
        └──────────────────────────────────────────────┘
                               │
                               ▼
                    ┌─────────────────────┐
                    │         END         │
                    └─────────────────────┘
```

# FIG. 5

START

Configure a first cell for transmission to a first wireless device based on a ZP CSI-RS and/or NZP CSI-RS configurations to trigger a CSI report S114

Select a subset of the plurality of cells for downlink transmission to the first wireless device based on at least one uplink signal quality of at least one uplink signal S116

Schedule downlink transmission to the wireless device on the selected subset of the plurality of cells based on a received CSI report S117

END

FIG. 6

START

Configure a N-transmit antenna CSI-
RS configuration for a cluster of M cells
having a total of N-transmit antennas
S118

Identify coordinating cells for wireless
device(s) in communication with at
least one cell of the cluster by
determining the UL received signal
quality   S120

Receive a CSI report from the wireless
device(s)
S122

Schedule a set of radio resources for
DL transmission on the selected cells
for the wireless device using the CSI
report received from the wireless
device   S124

Reuse the radio resources for another
wireless device
S126

END

# FIG. 7

```
                    ┌──────────────────────────┐
                    │          START           │
                    └──────────────────────────┘
                                  │
                                  ▼
        ┌──────────────────────────────────────────┐
        │  Measure the received power from a         │
        │  wireless device on UL at cell(s), $P_{UL}$ │
        │            (dBm)  S128                      │
        └──────────────────────────────────────────┘
                                  │
                                  ▼
        ┌──────────────────────────────────────────┐
        │  Filter the received power per cell, C, Pc │
        │  $P_C$ (current) = $\Gamma P_C$ (previous) + (1- │
        │       $\Gamma$)*$P_{UL,C}$    S130          │
        └──────────────────────────────────────────┘
                                  │
                                  ▼
        ┌──────────────────────────────────────────┐
        │  Identify the sector with the highest      │
        │  receive power, $P_{C,MAX}$, across all the │
        │            cells  S132                      │
        └──────────────────────────────────────────┘
                                  │
                                  ▼
        ┌──────────────────────────────────────────┐
        │  Compute for all the cells: $\Delta_C$ (i) = ($P_C$ │
        │       (i) – $P_{C,MAX}$ )  S134             │
        └──────────────────────────────────────────┘
                                  │
                                  ▼
        ┌──────────────────────────────────────────┐
        │  Select the cell with $\Delta_C$ (i) = 0 as the │
        │  main cell and select ith cell for         │
        │  coordination if $\Delta_C$ (i) < x  S136   │
        └──────────────────────────────────────────┘
                                  │
                                  ▼
        ┌──────────────────────────────────────────┐
        │  Schedule the DL transmission on the       │
        │  selected cells, precode the data based    │
        │  on CSI, and set signals from the non-     │
        │  coordinating cells to zero when           │
        │        precoding  S138                     │
        └──────────────────────────────────────────┘
                                  │
                                  ▼
                    ┌──────────────────────────┐
                    │           END            │
                    └──────────────────────────┘
```

# FIG. 8

Radio Resource Management
Node 16

Processor Module 34

Communication Module
36

Configuration Module
38

Coordination Module  40

Scheduling Module  42

Cell Coordination
Module 44

# FIG. 9

Node 12                                          Wireless Device 14

```
┌─────────────────────┐
│  Determine to change │
│  the serving cluster │
│  Scheduling Module   │
│        S140          │
└─────────────────────┘
```

RRC Connection Reconfiguration
(radioResourceConfigDedicatedPhysicalCo
nfigDedicatedCSI-RS-Config-r10)  S142

RRC Connection Reconfiguration Complete
S144

```
┌─────────────────────┐
│ Update Link Adaptation│
│  Parameters based on │
│   new CSI feedback   │
│        S146          │
└─────────────────────┘
```

# FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014286189 A1

- WO 2011100520 A1

**Non-patent literature cited in the description**

- **ERICSSON.** Discussion on number of CSI processes for Inter eNB CoMP. *3GPP DRAFT; R3-150723*

- 3rd Generation Partnership Project; Technical Specification Group Radio Access Network; Coordinated multi-point operation for LTE physical layer aspects (Release 11). *3GPP STANDARD; 3GPP TR 36.819,* vol. RAN WG1 (V11.2.0